# EUROPEAN PATENT SPECIFICATION

(11) **EP 2 621 223 B1**
(45) Date of publication and mention of the grant of the patent: **20.09.2017**
(21) Application number: 12152905.1
(22) Date of filing: 27.01.2012
(51) Int. Cl.: H04B 5/00, H04W 52/02

(54) **Mobile communications device providing enhanced near field communication (NFC) mode switching features and related methods**
Mobile Kommunikationsvorrichtung zur Bereitstellung verbesserter Modusumschaltfunktionen für Nahfeldkommunikation und zugehörige Verfahren
Dispositif de communication mobile fournissant des fonctions améliorées de commutation de mode de communication de champ proche et procédés correspondants

(43) Date of publication of application: 31.07.2013
(73) Proprietor: BlackBerry Limited, Waterloo, ON N2K 0A7 (CA)
(72) Inventor: Moosavi, Vahid, Waterloo, Ontario N2L 3W8 (CA)
(74) Representative: Roberts, Gwilym Vaughan

(56) References cited:
- US-A1- 2006 079 180
- US-A1- 2009 259 865
- US-A1- 2010 127 828
- US-B2- 6 905 074

## Description

### Technical Field

This application relates to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

US 2006/0079180 discloses methods, apparatus, systems and computer program products for energy management of short-range communication modules in mobile terminal devices.

US 2009/0259865 discloses power management using at least one of a special purpose processor and motion sensing.

### Brief Description of the Drawings

FIG. 1 is a schematic block diagram of a mobile communications device in accordance with one example aspect.
FIG. 2 is a schematic block diagram of the mobile communications device of FIG. 1 in accordance with another example aspect.
FIG. 3 is a flow diagram illustrating method aspects associated with the mobile communications devices of FIGS. 1 or 2.
FIGS. 4 and 5 are front views of example mobile devices illustrating different conditions that may be used for determining whether to switch between different NFC modes.
FIG. 6 is a schematic diagram illustrating example components that may be used with the mobile communications devices of FIGS. 1 or 2.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device is provided herein which may include a near field communication (NFC) device operable in a first NFC mode, comprising emitting electromagnetic carrier field pulses for detecting and communicating with other NFC devices, and a second NFC mode, comprising emitting electromagnetic carrier pulses of a shorter duration than in the first NFC mode to detect a magnetic field change, wherein the second NFC mode has a lower power consumption level associated therewith than the first NFC mode, and wherein the NFC device is arranged to generate a notification based upon detecting that the magnetic field changed more than a threshold. The mobile wireless communications device may further include a display and a processor coupled with the NFC device and arranged to: receive the notification from the NFC device when the NFC device is in the second NFC mode, determine a condition of the mobile communications device based upon whether the display is awakened and whether an application being processed by the processor is for use with the NFC device, and switch the NFC device from the second NFC mode to the first NFC mode based upon receipt of the notification, and the condition indicating that the display is awakened and the application being processed by the processor is for use with the NFC device. As such, the NFC device may advantageously remain in the second NFC mode, despite detecting a field change, and only switch to the higher power first NFC mode when appropriate based upon the condition determined by the processor.

More particularly, the NFC device may be capable of generating a notification based upon detecting the field change, and the processor may be further configured to switch the NFC device from the second NFC mode to the first NFC mode based upon the notification and the condition. The mobile communications device may further include an input device coupled with the processor, and the processor may determine the condition of the mobile communications device based upon the input device. By way of example, the input device may comprise a light sensor, a gyroscope, an accelerometer, or a satellite positioning device.

In addition, after being switched to the first NFC mode, the NFC device may be capable of switching back to the second NFC mode based upon a failure to establish NFC communications while in the first NFC mode. The first NFC mode may comprise at least one of a peer-to-peer (P2P) mode or a read/write (R/W) mode, and the second NFC mode may comprises a low power tag detect mode, for example.

A related communications method may be for a mobile wireless communications device, such as the one described briefly above. The method may include operating the NFC device in a first NFC mode, comprising emitting electromagnetic carrier field pulses for detecting and communicating with other NFC devices, and a second NFC mode , comprising emitting electromagnetic carrier field pulses of a shorter duration than in the first NFC mode to detect a magnetic field change, where the second NFC mode has a lower power consumption level associated therewith than the first NFC mode. The method may further include generating a notification at the NFC device based upon detecting that the magnetic field changed more than a thresholds, receiving the notification at the processor from the NFC device when the NFC device is in the second NFC mode, determining a condition of the mobile communications device with the processor based upon whether the display is awakened and whether an application being processed by the processor is for use with the NFC device, and causing the NFC device to switch from the second NFC mode to the first NFC mode based upon receipt of the notification and the condition indicating that the display is awakened and the application being processed by the processor is for use with the NFC device.

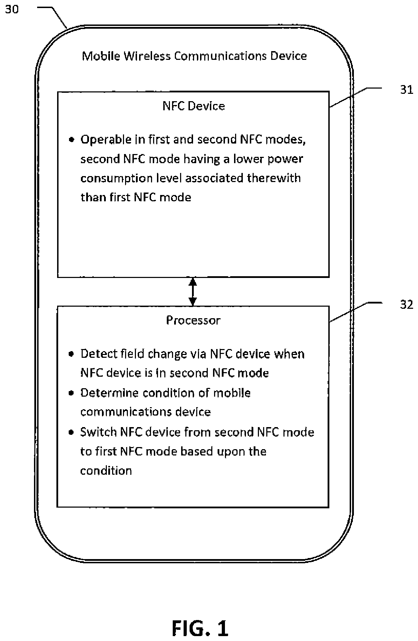

Referring initially to FIG. 1, a mobile communications device **30** (also referred to as a "mobile device" herein) illustratively includes a near field communication (NFC) device **31** and a processor **32** coupled with the NFC device **31.** By way of example, the NFC device **31** may be implemented as an NFC chipset including an NFC transceiver, an NFC controller, an embedded memory which may be configured as a secure element, etc., along with associated computer-executable instructions. The processor **32** may comprise a baseband processor, and it may be implemented using a combination of hardware (e.g., microprocessor, etc.) and a computer-readable medium having computer-executable instructions for performing the various operations noted herein. The processor **32** and NFC device **31** may communicate via a designated communications channel, such as a JSR-177 communications channel, for example, although other suitable communications formats may also be used. Example mobile devices **30** may include portable or personal media players (e.g., music or MP3 players, video players, electronic book readers, etc.), portable gaming devices, portable or mobile telephones, smartphones, portable computers such as tablet computers, digital cameras, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

Moreover, the NFC device **31** may be operable in first and second NFC modes, where the second NFC mode has a lower power consumption level associated therewith than the first NFC mode. By way of example, the first NFC mode may be one of a peer-to-peer (P2P) mode or a read/write (R/W) mode, for example. In these modes, the NFC device **31** may generate electromagnetic carrier field pulses for detecting and communicating with other types of NFC devices. However, when operating in such modes, the NFC device **31** may consume a significant amount of power (e.g., several milliamps per second), which may lead to reduced battery life for the mobile device **30.** As such, while this power consumption might be acceptable for short durations when the NFC device **31** is actively communicating, it may be desirable to switch the NFC transceiver to the second, lower power NFC mode when NFC communication is not in use, or is unlikely to be used.

By way of example, the second NFC mode in which the NFC device **31** may be operated may comprise an NFC low power tag detect mode. By way of comparison, in a low power tag detect mode, the NFC device **31** may similarly emit electromagnetic carrier field pulses, but of a relatively shorter duration than in the above-noted P2P or R/W modes, to detect a magnetic field change. That is, rather than attempting to engage in near field communication, which would require longer duration active mode pulses, the NFC device **31** instead emits the shorter pulses for the purpose of determining relative movement with respect to objects in its vicinity. That is, metal or other materials will result in a given magnetic field measurement or reading by the NFC device **31** when it enters a low power tag detect mode. Yet, when the NFC device **31** and the surrounding object(s) are moved relative to one another, then the given field measurement will change. So, for example, if this measurement changes beyond a threshold level, then the NFC device **31** may determine that the mobile device **30** has been moved, which may in some circumstances be indicative that NFC communication is desired.

In the second NFC mode (e.g., low power tag detection mode), the NFC device **31** may have a significantly lower power consumption than when operating in the first NFC mode. For example, in a low power tag detect mode, the NFC device **31** may have a power consumption (e.g., current draw) in the micro amp per second range (e.g., approximately 15-150 µA).

In some embodiments, the NFC device **31** may cycle between R/W, P2P, and card emulation (CE) modes when it is awakened or activated to scan for (or be scanned by) another NFC device, such as upon being "awakened" from the low power tag detect mode. In the CE mode, the NFC device **31** operates as a passive device, meaning it does not emit electromagnetic field pulses but instead waits for a field from a reader device, thus emulating an unpowered NFC card when it is swiped with a reader. The NFC device **31** may also switch or cycle between the low power tag detect mode and the CE mode when is it "asleep" or in standby in the second NFC mode.

Generally speaking, when in a low power tag detect mode, NFC devices are configured to automatically switch to an active scanning mode as soon as a field change is detected. However, a problem associated with such configurations is that a low power tag detect mode may result in numerous false positives. For example, if the mobile device **30** were resting on a countertop with car keys close by, when the car keys are picked up the NFC device would detect or determine that the field had changed. Yet, since the mobile device **30** had not moved, there would likely be no reason to initiate NFC communication, and therefore no reason to switch the NFC device from low power tag detect mode to the first NFC mode.

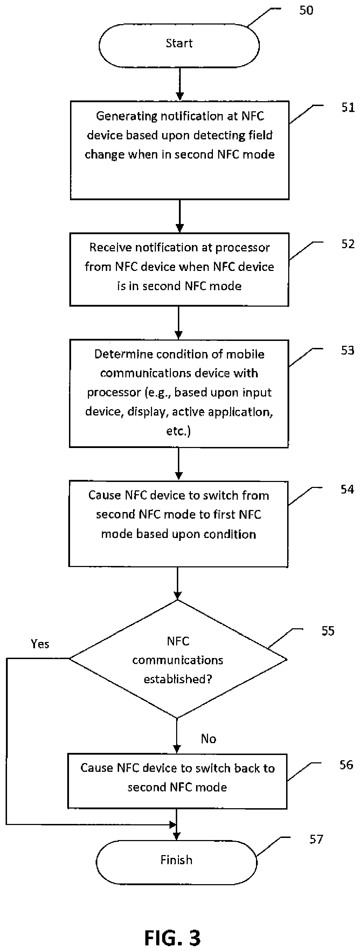

Referring additionally to FIG. 3, beginning at Block **50,** rather than have the NFC device **31** immediately switch to an active mode responsive to detecting a load change on the field when in low power tag detect mode, the processor **32** may instead be made aware of this detection and make determination on whether switching to an active NFC mode is necessary or appropriate. In accordance with one example, the NFC device **31** may advantageously be capable of generating a notification based upon detecting a field change when in the second NFC mode which is received by the processor **32,** at Blocks **51-52.** For example, the NFC device **31** may measure the field during an initial scan cycle when first switched to the second NFC mode. As long as the field does not change more than a threshold value (which may be configurable in some embodiments) from an initial measured field value, the NFC device **31** will not generate the notification. However, when a field change is detected (i.e., the field changes by more than the threshold value), instead of immediately switching to the first NFC mode as described above in a typical low power tag detect mode implementation, the NFC device **31** may instead generate the notification for the processor **32.** This advantageously allows the processor **32** to determine whether switching to the first NFC mode is appropriate, rather than having the NFC device **31** automatically and indiscriminately switch to the first NFC mode, which in some circumstances may result in unnecessary power consumption.

The processor **32** may determine a condition of the mobile device **30** at the time of the detected field change, or before or after the time of the field change, at Block **53,** as will be described further below. The condition may be determined responsive to the notification, or the condition determination may be an ongoing operation performed by the processor **32** such that when the notification is received, the current condition of the mobile device **30** will already be known. When the condition warrants or is otherwise appropriate, the processor **32** may cause the NFC device **31** to switch from the second NFC mode to the first NFC mode following receipt of the notification, at Block **54.**

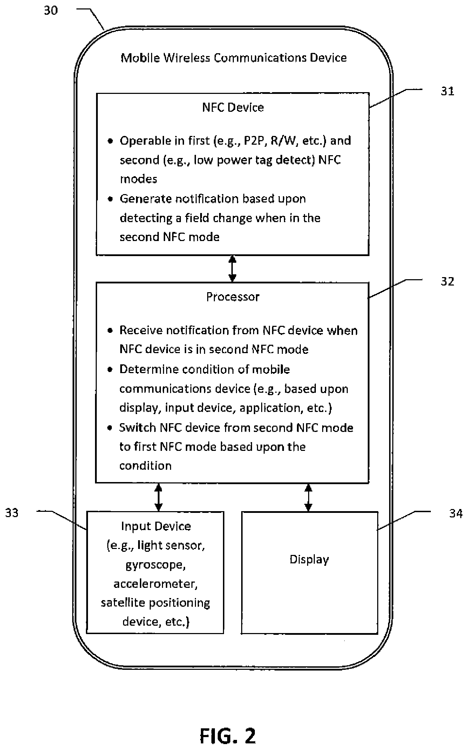

Referring further to FIG. 2, the mobile device **30** may also illustratively include one or more input devices **33** coupled with the processor **32.** In one example embodiment, the processor **32** may determine the condition of the mobile device **30** based upon the input device **33.** For example, the input device **33** may comprise a sensor or module that provides an indication that the mobile device **30** has been moved, such as a gyroscope, an accelerometer, wireless communications device (e.g., Bluetooth, wireless LAN, etc.), or a satellite positioning system device, such as a global positioning system (e.g., GPS, GLONASS, Galileo, or other similar global navigation device). As such, upon receipt of the notification from the NFC device **31** that the field has been changed, if the processor **32** determines that the mobile device **30** has recently been moved or is currently being moved, then this indicates that the field change was a result of movement of the mobile device. This means there may be an increased chance that NFC communication is likely to be required.

Another example input device **33** may comprise a light sensor, such as to determine an ambient light level. By way of example, if the mobile device **30** is within a case, purse, pocket, holster, etc., then a relatively low ambient light level may be detected. Thus, a detected low light level may be considered as an indication that the mobile device **30** is within a purse, pants pocket, holster, etc., and therefore switching to the first NFC mode may be deemed inappropriate despite the detected field change. As such, the processor **32** may allow the NFC device to remain in the second NFC mode.

On the other hand, a relatively high detected light level may indicate that it is appropriate for the processor **32** to cause the NFC device **31** to switch to the first NFC mode. In accordance with another example, multiple inputs may be considered by the processor **32** in determining the condition of the mobile device **30.** For example, if a movement sensor (e.g., a gyroscope, accelerometer, satellite positioning device, etc.) determines that the mobile device **30** has been moved or is moving when a notification is received, if the light sensor determines a low light level (e.g., that the mobile device is still within a holster), then the processor **32** may allow the NFC device **31** to remain in the second NFC mode. Other example input devices **33** which may be considered to determine the condition of the mobile device **30** may include one or more input keys (e.g., a keypad or keyboard), a track pad, scroll wheel, track ball, convenience keys or buttons, touch screen, etc.

In accordance with another example, the mobile device **30** may further include a display **34** coupled with the processor **32.** Similar to a light sensor, the state of the display **34** (i.e., illuminated or not illuminated, such whether the display is in a sleep or timeout mode or not) may also provide an indication of the condition of the mobile device **30.** For example, while the notification may have been received indicating a field change, and a movement sensor may indicate movement is occurring or has occurred, if the display **34** has not been "awakened" or illuminated (e.g., by pressing an input key, touch screen, etc.), then this may be taken as an indication that NFC communications are still not yet required, and thus the processor **32** may accordingly allow the NFC device **31** to remain in the second NFC mode. Conversely, waking or illumination of the display **34** in such a circumstance may result in the processor **32** causing the NFC device **31** to switch to the first NFC mode.

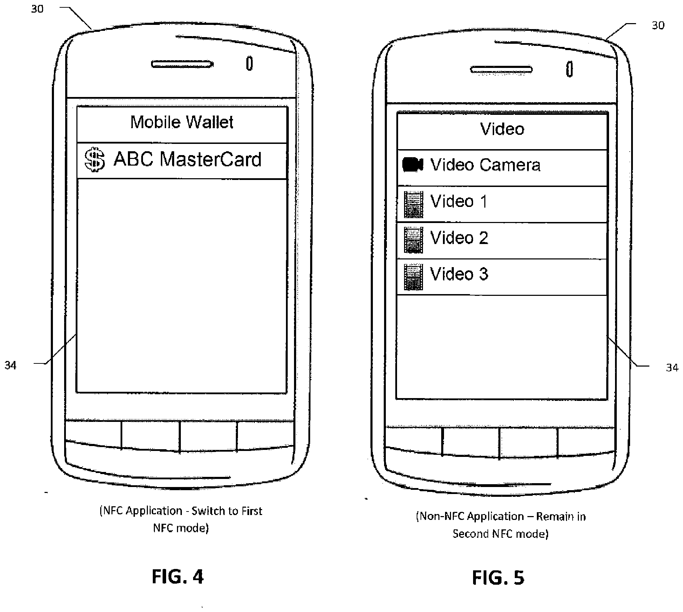

Turning now additionally to FIGS. 4 and 5, in accordance with another example embodiment the condition of the mobile device **30** may correspond with the given application being processed by the processor **32.** For example, if the application that is "active" or being processed in the foreground by the processor **32** is for use with the NFC device **31,** then the notification may prompt the processor **32** to switch the NFC device **31** to the first NFC mode. In the example of FIG. 4, a mobile or electronic wallet application is open and being processed in the foreground (i.e., it is shown on the display **34)** by the processor **32.** The mobile wallet application provides a user interface for selection of various NFC-enabled "soft" or electronic cards, such as electronic credit, security, or transportation cards, to communicate with corresponding NFC terminals or readers via the NFC device **31.** As such, having the mobile wallet application (or other applications that utilize NFC communication) in the foreground or active as shown in FIG. 4 may cause the processor **32** to cause the NFC device **31** to switch to the first NFC mode when the notification is received.

On the other hand, in the example of FIG. 5 the active or foreground application is a video application, which provides a user interface for reviewing stored video files and capturing new videos via a video camera feature. Since this example application is not configured for utilizing NFC communication, if the notification is received while this application is active then the processor **32** may allow the NFC device **31** to remain in the second NFC mode.

In some embodiments, once the notification is generated, the condition of the mobile device **30** may be used not only to determine whether the NFC device **31** should be switched to the first NFC mode, but more particularly how the first NFC mode may be implemented. That is, the processor **32** may advantageously instruct the NFC device **31** whether a P2P or R/W scan mode is appropriate based upon the given condition of the mobile device **30.** For example, if an image file has been designated for transfer to another NFC-enabled device, the processor **32** may advantageously instruct the NFC device to switch to a P2P mode, which may be most appropriate for the file transfer. In accordance with another example, if a security card has been selected, the processor **32** may instruct the NFC device **31** to switch to the R/W mode in anticipation of communicating with a security access terminal, for example.

To provide still further power saving features, after being switched to the first NFC mode, the NFC device **31** may optionally switch back to the second NFC mode based upon a failure to establish NFC communications while in the first NFC mode, at Blocks **55-56,** which illustratively concludes the method shown in FIG. 3 (Block **57).** For example, upon switching from the second NFC mode to the first NFC mode, if after a given number of scans in the R/W or P2P (or both) modes the NFC device **31** does not establish an NFC communications link with another NFC device, then the NFC device **31** may again return to the second NFC mode (e.g., the low power tag detect mode), at which point the steps described with reference to Blocks **51-54** may be repeated. In accordance with one example implementation, the given number of scans may be about twenty or less, although other numbers may be used in different embodiments. Here again, this may result in a significant reduction in power consumption, as operation of the NFC device **31** in the first NFC mode may require current consumption on the order of micro amps versus milliamps for the second NFC mode. In another embodiment, the NFC device **31** may switch back to the second NFC mode upon failure to establish NFC communication while in the first NFC mode within a particular threshold time (e.g. 30 seconds) after switching to the first NFC mode. The threshold time may be configured via a user interface of the mobile device **30.**

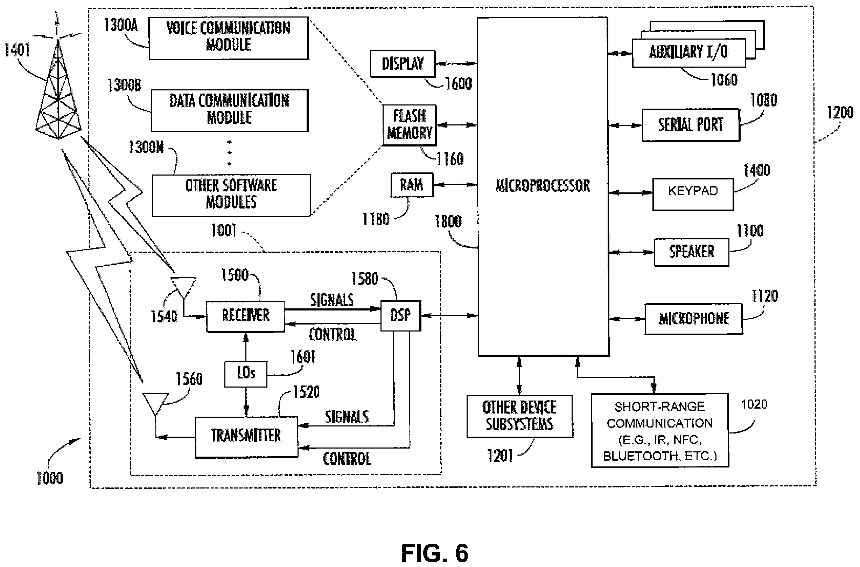

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (30) comprising:
a near field communication "NFC" device (31) operable in a first NFC mode, comprising emitting electromagnetic carrier field pulses for detecting and communicating with other NFC devices, and a second NFC mode, comprising emitting electromagnetic carrier field pulses of a shorter duration than in the first NFC mode to detect a magnetic field change, wherein the second NFC mode has a lower power consumption level associated therewith than the first NFC mode, and wherein the NFC device is arranged to generate a notification based upon detecting that the magnetic field changed more than a threshold; and a display (34); and a processor (32) coupled with the NFC device and arranged to:
receive the notification from the NFC device when the NFC device is in the second NFC mode,
determine a condition of the mobile communications device based upon whether the display is awakened and whether an application being processed by the processor is for use with the NFC device, and
switch the NFC device from the second NFC mode to the first NFC mode based upon receipt of the notification, and the condition indicating that the display is awakened and the application being processed by the processor is for use with the NFC device.

2. The mobile communications device of Claim 1 further comprising an input device (33) coupled with the processor; and wherein the processor is arranged to determine the condition of the mobile communications device based upon the input device.

3. The mobile communications device of Claim 2 wherein the input device comprises a light sensor.

4. The mobile communications device of Claim 2 wherein the input device comprises a gyroscope.

5. The mobile communications device of Claim 2 wherein the input device comprises an accelerometer.

6. The mobile communications device of Claim 2 wherein the input device comprises a satellite positioning device.

7. A communications method for a mobile wireless communications device comprising a near field communication "NFC" device, a display, and a processor coupled with the NFC device and display, the NFC device being operable in a first NFC mode, comprising emitting electromagnetic carrier field pulses for detecting and communicating with other NFC devices, and a second NFC mode, comprising emitting electromagnetic carrier field pulses of a shorter duration than in the first NFC mode to detect a magnetic field change, wherein the second NFC mode has a lower power consumption level associated therewith than the first NFC mode, the method comprising:
generating a notification at the NFC device based upon detecting that the magnetic field changed more than a threshold;
receiving at the processor the notification from the NFC device when the NFC device is in the second NFC mode;
determining a condition of the mobile communications device with the processor based upon whether the display is awakened and whether an application being processed by the processor is for use with the NFC device; and
causing the NFC device to switch from the second NFC mode to the first NFC mode based upon receipt of the notification, and the condition indicating that the display is awakened and the application being processed by the processor is for use with the NFC device.

8. The method of Claim 7 wherein determining the condition comprises determining the condition of the mobile communications device based upon an input device of the mobile communications device.

9. The method of Claim 8 wherein determining the condition comprises determining the condition of the mobile communications device based upon a light sensor of the mobile communications device.

10. The method of Claim 8 wherein determining the condition comprises determining the condition of the mobile communications device based upon at least one of a gyroscope or an accelerometer of the mobile communications device.

11. The method of Claim 8 wherein determining the condition comprises determining the condition of the mobile communications device based upon a satellite positioning device of the mobile communications device.

## Patentansprüche

1. Mobile drahtlose Kommunikationsvorrichtung (30) umfassend:
eine Nahfeldkommunikations-(NFC-)Vorrichtung (31), die in einem ersten NFC-Modus, der das Aussenden elektromagnetischer Trägerfeldimpulse zum Feststellen von und Kommunizieren mit anderen NFC-Vorrichtungen umfasst, und einem zweiten NFC-Modus betriebsbereit ist, der das Aussenden elektromagnetischer Trägerfeldimpulse von einer kürzeren Dauer als im ersten NFC-Modus umfasst, um eine Magnetfeldänderung festzustellen, wobei der zweite NFC-Modus mit einem geringeren Leistungsaufnahmeniveau verbunden ist als der erste NFC-Modus, und wobei die NFC-Vorrichtung so angeordnet ist, dass sie eine Benachrichtigung aufgrund des Feststellens erzeugt, dass sich das Magnetfeld um mehr als einen Schwellenwert geändert hat; und
eine Anzeige (34); und
einen Prozessor (32), der mit der NFC-Vorrichtung verbunden und angeordnet ist, um:
die Benachrichtigung von der NFC-Vorrichtung zu empfangen, wenn sich die NFC-Vorrichtung im zweiten NFC-Modus befindet,
einen Zustand der mobilen Kommunikationsvorrichtung aufgrund dessen festzustellen, ob die Anzeige erweckt ist und ob eine vom Prozessor bearbeitete Anwendung zum Gebrauch mit der NFC-Vorrichtung bestimmt ist, und
die NFC-Vorrichtung aufgrund des Empfangens der Benachrichtigung und aufgrund dessen, dass der Zustand angibt, dass die Anzeige erweckt ist und die vom Prozessor verarbeitete Anwendung zum Gebrauch mit der NFC-Vorrichtung bestimmt ist, vom zweiten NFC-Modus in den ersten NFC-Modus zu schalten.

2. Mobile Kommunikationsvorrichtung nach Anspruch 1, die ferner eine Eingabevorrichtung (33) umfasst, die mit dem Prozessor verbunden ist; und wobei der Prozessor so angeordnet ist, dass er den Zustand der mobilen Kommunikationsvorrichtung aufgrund der Eingabevorrichtung feststellt.

3. Mobile Kommunikationsvorrichtung nach Anspruch 2, wobei die Eingabevorrichtung einen Lichtsensor umfasst.

4. Mobile Kommunikationsvorrichtung nach Anspruch 2, wobei die Eingabevorrichtung ein Gyroskop umfasst.

5. Mobile Kommunikationsvorrichtung nach Anspruch 2, wobei die Eingabevorrichtung einen Beschleunigungsmesser umfasst.

6. Mobile Kommunikationsvorrichtung nach Anspruch 2, wobei die Eingabevorrichtung eine Satellitenortungsvorrichtung umfasst.

7. Kommunikationsverfahren für eine mobile drahtlose Kommunikationsvorrichtung, die eine Nahfeldkommunikation-(NFC-)Vorrichtung, eine Anzeige und einen Prozessor umfasst, der mit der NFC-Vorrichtung und der Anzeige verbunden ist, wobei die NFC-Vorrichtung in einem ersten NFC-Modus, der das Aussenden elektromagnetischer Trägerfeldimpulse zum Feststellen von und Kommunizieren mit anderen NFC-Vorrichtungen umfasst, und einem zweiten NFC-Modus betriebsbereit ist, der das Aussenden elektromagnetischer Trägerfeldimpulse von einer kürzeren Dauer als im ersten NFC-Modus umfasst, um eine Magnetfeldänderung festzustellen, wobei der zweite NFC-Modus mit einem geringeren Leistungsaufnahmeniveau verbunden ist als der erste NFC-Modus, das Verfahren umfassend:
Erzeugen einer Benachrichtigung an der NFC-Vorrichtung aufgrund des Feststellens, dass sich das Magnetfeld um mehr als einen Schwellenwert geändert hat;
Empfangen der Benachrichtigung von der NFC-Vorrichtung am Prozessor, wenn sich die NFC-Vorrichtung im zweiten NFC-Modus befindet;
Feststellen eines Zustands der mobilen Kommunikationsvorrichtung mit dem Prozessor aufgrund dessen, ob die Anzeige erweckt ist und ob eine vom Prozessor bearbeitete Anwendung zum Gebrauch mit der NFC-Vorrichtung bestimmt ist, und
Veranlassen der NFC-Vorrichtung aufgrund des Empfangens der Benachrichtigung und aufgrund dessen, dass der Zustand angibt, dass die Anzeige erweckt ist und die vom Prozessor verarbeitete Anwendung zum Gebrauch mit der NFC-Vorrichtung bestimmt ist, vom zweiten NFC-Modus in den ersten NFC-Modus zu schalten.

8. Verfahren nach Anspruch 7, wobei das Feststellen des Zustands das Feststellen des Zustands der mobilen Kommunikationsvorrichtung aufgrund einer Eingabevorrichtung der mobilen Kommunikationsvorrichtung umfasst.

9. Verfahren nach Anspruch 8, wobei das Feststellen des Zustands das Feststellen des Zustands der mobilen Kommunikationsvorrichtung aufgrund eines Lichtsensors der mobilen Kommunikationsvorrichtung umfasst.

10. Verfahren nach Anspruch 8, wobei das Feststellen des Zustands das Feststellen des Zustands der mobilen Kommunikationsvorrichtung aufgrund mindestens einem aus einem Gyroskop oder einem Beschleunigungsmesser der mobilen Kommunikationsvorrichtung umfasst.

11. Verfahren nach Anspruch 8, wobei das Feststellen des Zustands das Feststellen des Zustands der mobilen Kommunikationsvorrichtung aufgrund einer Satellitenortungsvorrichtung der mobilen Kommunikationsvorrichtung umfasst.

## Revendications

1. Dispositif de communication mobile sans fil (30) comprenant :
un dispositif de communication en champ proche (NFC) (31), pouvant fonctionner dans un premier mode NFC, comprenant l'émission d'impulsions de champ porteur électromagnétique pour détecter et communiquer avec d'autres dispositifs NFC, et dans un second mode NFC, comprenant l'émission d'impulsions de champ porteur électromagnétique d'une durée plus courte que celles du premier mode NFC pour détecter un changement du champ magnétique, dans lequel le second mode NFC présente un niveau de consommation d'énergie plus faible que le premier mode NFC, et le dispositif NFC étant agencé de façon à générer une notification sur la base de la détection d'un changement du champ magnétique supérieur à un seuil ; et
un écran (34) ; et
un processeur (32) couplé au dispositif NFC et agencé pour :
recevoir la notification provenant du dispositif NFC quand le dispositif NFC se trouve dans le second mode NFC,
déterminer une condition du dispositif de communication mobile basé sur le fait que l'écran est allumé et si une application en cours de traitement par le processeur est destinée à être utilisée avec le dispositif NFC, et
commuter le dispositif NFC du second mode NFC au premier mode NFC sur la base de la réception de la notification et de la condition indiquant que l'écran est allumé et que l'application en cours de traitement par le processeur est destinée à être utilisée avec le dispositif NFC.

2. Dispositif de communication mobile selon la revendication 1, comprenant en outre un dispositif d'entrée (33) couplé au processeur ; et dans lequel le processeur est agencé de façon à déterminer la condition du dispositif de communication mobile sur la base du dispositif d'entrée.

3. Dispositif de communication mobile selon la revendication 2, dans lequel le dispositif d'entrée comprend un détecteur de lumière.

4. Dispositif de communication mobile selon la revendication 2, dans lequel le dispositif d'entrée comprend un gyroscope.

5. Dispositif de communication mobile selon la revendication 2, dans lequel le dispositif d'entrée comprend un accéléromètre.

6. Dispositif de communication mobile selon la revendication 2, dans lequel le dispositif d'entrée comprend un dispositif de localisation par satellite.

7. Procédé de communication pour un dispositif de communication mobile sans fil comprenant un dispositif de communication en champ proche (NFC), un écran et un processeur couplé au dispositif NFC et à l'écran, le dispositif NFC pouvant fonctionner dans un premier mode NFC, comprenant l'émission d'impulsions de champ porteur électromagnétique pour détecter et communiquer avec d'autres dispositifs NFC, et dans un second mode NFC, comprenant l'émission d'impulsions de champ porteur électromagnétique d'une durée plus courte que celles du premier mode NFC pour détecter un changement du champ magnétique, dans lequel le second mode NFC présente un niveau de consommation d'énergie plus faible que le premier mode NFC, le procédé comprenant les étapes suivantes :
générer une notification au dispositif NFC sur la base de la détection d'un changement du champ magnétique supérieur à un seuil ;
recevoir au niveau du processeur la notification provenant du dispositif NFC quand le dispositif NFC se trouve dans le second mode NFC ;
déterminer une condition du dispositif de communication mobile avec le processeur basé sur le fait que l'écran est allumé et si une application en cours de traitement par le processeur est destinée à être utilisée avec le dispositif NFC ; et
amener le dispositif NFC à commuter du second mode NFC au premier mode NFC sur la base de la réception de la notification et de la condition indiquant que l'écran est allumé et que l'application en cours de traitement par le processeur est destinée à être utilisée avec le dispositif NFC.

8. Procédé selon la revendication 7, dans lequel la détermination de la condition comprend la détermination de la condition du dispositif de communication mobile sur la base d'un dispositif d'entrée du dispositif de communication mobile.

9. Procédé selon la revendication 8, dans lequel la détermination de la condition comprend la détermination de la condition du dispositif de communication mobile sur la base d'un détecteur de lumière du dispositif de communication mobile.

10. Procédé selon la revendication 8, dans lequel la détermination de la condition comprend la détermination de la condition du dispositif de communication mobile sur la base d'au moins un élément parmi un gyroscope ou un accéléromètre du dispositif de communication mobile.

11. Procédé selon la revendication 8, dans lequel la détermination de la condition comprend la détermination de la condition du dispositif de communication mobile sur la base d'un dispositif de localisation par satellite du dispositif de communication mobile.
